# FASCICULE DE BREVET EUROPEEN

(11) **EP 0 551 224 B1**
(45) Date de publication et mention de la délivrance du brevet: **17.07.1996**
(21) Numéro de dépôt: 93400010.0
(22) Date de dépôt: 05.01.1993
(51) Int. Cl.: H04B 7/26, H04B 7/24

(54) **Procédé d'allocation de fréquences porteuses dans un réseau de transmission, notamment réseau tactique**
Verfahren zur Trägerfrequenzenzuweisung in einem Übertragungsnetzwerk, insbesondere in einem taktischen Netz
Frequency carrier allocation procedure in a transmission network, in particular tactical network

(30) Priorité: 10.01.1992 FR 9200198
(43) Date de publication de la demande: 14.07.1993
(73) Titulaire: ALCATEL TELSPACE, F-92734 Nanterre Cédex (FR)
(72) Inventeur: Montarges, Jean, F-78330 Fontenay le Fleury (FR); Destouesse, Claude, F-95100 Argenteuil (FR); Deygout, Jacques, F-91240 Saint Michel sur Orge (FR)
(74) Mandataire: El Manouni, Josiane

(56) Documents cités:
- DE-A- 3 337 648
- MILCOM88 vol. 3, Octobre 1988, SAN DIEGO,US pages 783 - 791 LINSKY 'System Control for the Mobile Subscriber Equipment (MSE) Tactical Communications Nework'

## Description

La présente invention concerne un procédé d'allocation de fréquences porteuses pour transmission à l'intérieur d'un réseau de transmission.

L'invention s'applique notamment aux réseaux de transmission tactiques par faisceaux hertziens, pour lesquels une telle allocation est rendue particulièrement complexe du fait de l'extrême mobilité de ces réseaux.

D'une manière générale, pour de tels réseaux, une telle allocation doit avoir un caractère aléatoire de façon à décourager toute tentative de prévision par l'ennemi. Il est ainsi connu de réaliser, pour toute fréquence à allouer à une liaison entre un équipement d'émission situé dans l'un des sites de ce réseau et un équipement de réception situé dans un autre site de ce réseau, une telle allocation par tirage aléatoire dans l'ensemble des fréquences porteuses constituant la ressource en fréquences disponible pour ce réseau, après avoir retiré de cet ensemble les fréquences dites interdites pour la liaison considérée, du fait de contraintes internes à ce réseau dues à la proximité d'autres équipements d'émission ou de réception, dans les sites considérés ainsi que dans des sites voisins.

Un tel procédé a pour inconvénient essentiel de conduire en pratique à des situations dites de blocage, où des demandes d'allocation ne peuvent aboutir.

Le document DE-A-3 337 648 décrit quant-à lui un système où l'allocation peut être aléatoire.

La présente invention a pour but d'éviter un tel inconvénient.

La présente invention a pour objet un procédé d'allocation de fréquences porteuses pour transmission à l'intérieur d'un réseau de transmission, notamment tactique, essentiellement caractérisé en ce qu'il comporte :
- un découpage de l'ensemble des fréquences porteuses constituant la ressource en fréquences disponibles pour ce réseau, en lots d'importance inégale,
- une attribution à tout site du réseau, au moment de son entrée dans le réseau, se traduisant par une demande d'allocation de fréquence pour une liaison entre ce site et un autre site, dit site de première mise en relation pour le site considéré, et préalablement à cette allocation, d'un état parmi deux états complémentaires possibles, cet état étant choisi de façon à obtenir des états complémentaires pour le site considéré et pour son site de première mise en relation, et étant conservé pour des liaisons ultérieures entre le site considéré et d'autres sites du réseau,
- pour toute liaison à établir entre deux sites de ce réseau, une allocation de fréquence par tirage aléatoire dans celui de ces lots qui est de plus grande importance, si les sites considérés sont dans des états complémentaires, ou dans celui de ces lots qui est de moindre importance si les sites considérés sont dans des états identiques.

D'autres objets et caractéristiques de la présente invention apparaîtront à la lecture de la description suivante d'un exemple de réalisation, faite en relation avec les dessins ci-annexés dans lesquels :
- la figure 1 est un diagramme destiné à illustrer l'étape du procédé suivant l'invention, suivant laquelle est effectué un découpage de la ressource en fréquences disponible pour le réseau considéré, en lots d'importance inégale;
- la figure 2 est un diagramme destiné à illustrer l'étape du procédé suivant l'invention, suivant laquelle est effectué une attribution d'un état parmi deux états complémentaires à tout site de ce réseau,
- la figure 3 est un diagramme destiné à illustrer les contraintes internes au réseau, conduisant à la définition de fréquences dites interdites.

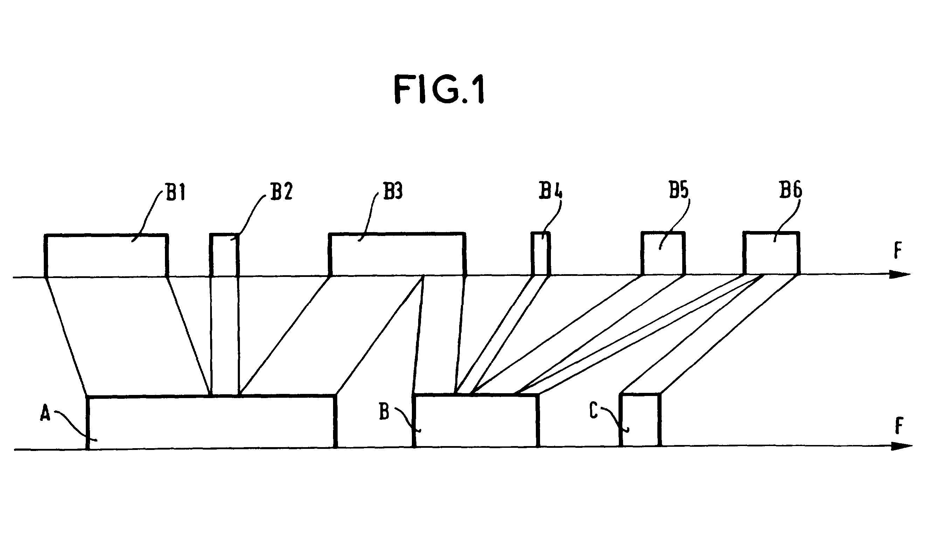

Le diagramme de la figure 1 représente un exemple de ressource en fréquences disponible pour un réseau de transmission, cette ressource en fréquences étant en l'occurence formée de blocs disjoints sur l'axe des fréquences, tel qu'illustré schématiquement à la première ligne de ce diagramme où de tels blocs, à titre d'exemple de largeur inégale et en nombre égal à six, sont repérés respectivement B1, B2, B3, B4, B5, B6.

La deuxième ligne de ce diagramme illustre un exemple de répartition des fréquences de cette ressource en trois lots d'inégale importance, repérés respectivement A, B et C par ordre d'importance décroissante.

A titre d'exemple, le lot A pourra constituer 60 % de la ressource disponible, le lot B, 30 % et le lot C, 10 %. D'autres exemples de répartition sont bien entendu possibles.

Dans l'exemple illustré sur la figure 1, le lot A est formé à partir des blocs B1 et B2 et d'une partie du bloc B3, le lot B est formé à partir de l'autre partie du bloc B3, des blocs B4 et B5, et d'une partie du bloc B6, et le lot C est constitué de l'autre partie du bloc B6. D'autres exemples de répartition sont bien entendu possibles.

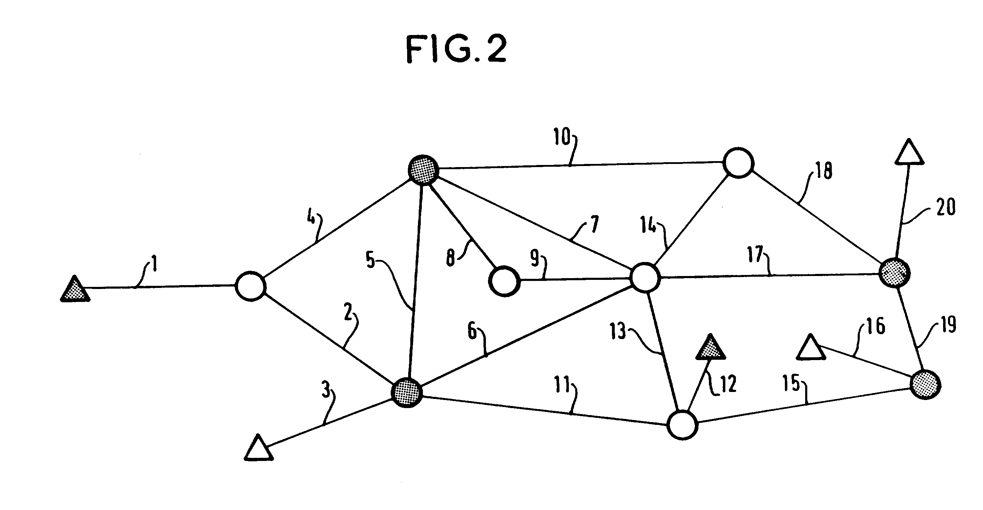

La figure 2 représente schématiquement un réseau de transmission maillé, dans lequel les noeuds de ce réseau sont symbolisés par des cercles, les usagers de ce réseau sont symbolisés par des triangles, et les numéros associés à chaque liaison usager-noeud ou noeud-noeud représentent le numéro d'ouverture de cette liaison au fur et à mesure du déploiement de ce réseau, c'est-à-dire de l'entrée de ces noeuds ou de ces usagers dans ce réseau.

Ces cercles ou ces triangles (qui seront regroupés sous le terme générique de sites) sont, à des fins d'illustration du procédé suivant l'invention, coloriés tantôt en noir, tantôt en blanc, de la façon maintenant décrite.

Tout site pour lequel aucune liaison n'a encore été établie se voit, au moment de son entrée dans le réseau, c'est-à-dire au moment d'une demande d'allocation de fréquence pour une liaison entre lui-même et un autre site, dit site de première mise en relation pour le site considéré, et préalablement à cette allocation :
- soit colorié arbitrairement (en noir ou en blanc), si cet autre site n'est pas lui-même déjà colorié, cet autre site se voyant alors lui-même colorié de façon opposée,
- soit colorié de façon opposée à cet autre site si celui-ci était lui-même déjà colorié.

Ainsi comme illustré sur cette figure, lors du déploiement du réseau, les différents sites sont coloriés de proche en proche de deux couleurs alternées, définissant ainsi un ensemble de liaisons aux couleurs alternées ("blanc-noir" ou "noir-blanc").

Pour des liaisons de ce type, l'allocation d'une fréquence sera réalisée par tirage aléatoire dans le lot A de plus grande importance.

Un site colorié de la façon indiquée ci-dessus conserve en outre la couleur ainsi acquise pour d'éventuelles liaisons ultérieures entre lui-même et des sites autres que ce site de première mise en relation. Dans ces conditions, il est possible que l'on soit amené, au fur et à mesure du déploiement du réseau, à effectuer des liaisons entre sites déjà coloriés, et ce de façon identique.

Pour ces liaisons, du type "blanc-blanc" ou "noir-noir", statistiquement en nombre plus restreint que les précédentes, l'allocation d'une fréquence sera effectuée par tirage aléatoire dans le lot B de moindre importance.

Le caractère aléatoire du tirage des fréquences est ainsi tempéré par un classement initial déterministe de ces fréquences. Le caractère semi-aléatoire ainsi obtenu permet de faire face aux situations de blocage mentionnées plus haut.

La constitution d'un lot de fréquences en réserve (lot C) permet éventuellement d'attribuer, en dernier recours, un couple de fréquences à une liaison pour laquelle une fréquence n'aurait pu être allouée.

Le tirage aléatoire du couple de fréquences nécessaires à la liaison ainsi coloriée, dans le lot correspondant audit coloriage, est réalisé après avoir retiré de ce lot les fréquences dites interdites.

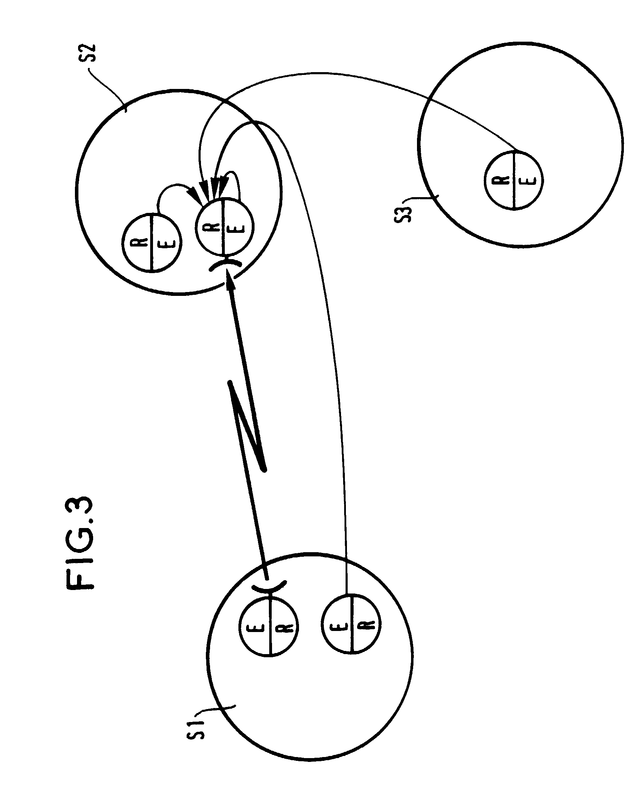

Les différentes sources d'interdiction de fréquences sont rappelées sur le diagramme de la figure 3.

Cette figure représente schématiquement des équipements d'émission, notés E, et des équipements de réception, notés R, de trois sites voisins, notés S1, S2, S3.

Pour une liaison à établir, à titre d'exemple entre un émetteur du site S1 et un récepteur du site S2, peuvent être considérées comme fréquences interdites, après vérifications :
- une fréquence allouée à l'émetteur associé au récepteur considéré du site S2,
- une fréquence allouée à un émetteur du site S2 autre que celui associé au récepteur considéré,
- une fréquence allouée à un émetteur du site S1 autre que l'émetteur considéré,
- une fréquence allouée à un émetteur d'un site, tel que S3, autre que S1 et S2.

Sur la figure 3 est schématisée en trait plein la liaison à établir considérée, et en pointillés les interférences possibles avec les fréquences interdites.

## Revendications

1. Procédé d'allocation de fréquences porteuses pour transmission à l'intérieur d'un réseau de transmission, notamment tactique, caractérisé en ce qu'il comporte :
- un découpage de l'ensemble des fréquences porteuses constituant la ressource en fréquences disponible pour ce réseau, en lots d'importance inégale,
- une attribution à tout site du réseau, au moment de son entrée dans le réseau, se traduisant par une demande d'allocation de fréquence pour une liaison entre ce site et un autre site, dit site de première mise en relation pour le site considéré, et préalablement à cette allocation, d'un état parmi deux états complémentaires possibles, cet état étant choisi de façon à obtenir des états complémentaires pour le site considéré et pour son site de première mise en relation, et étant conservé pour des liaisons ultérieures entre le site considéré et d'autres sites du réseau,
- pour toute liaison à établir entre deux sites de ce réseau, une allocation de fréquence par tirage aléatoire dans celui de ces lots qui est de plus grande importance, si les sites considérés sont dans des états complémentaires, ou dans celui de ces lots qui est de moindre importance si les sites considérés sont dans des états identiques.

2. Procédé selon la revendication 1, caractérisé en ce que lesdits lots d'importance inégale sont en nombre égal à trois, et en ce que le lot de moindre importance est alors utilisé comme lot de fréquences en réserve.

3. Procédé selon la revendication 2, caractérisé en ce que la taille relative desdits lots est respectivement de 60 %, 30 %, 10%.

4. Procédé selon l'une des revendications 1 à 3, caractérisé en ce que dans le cas où des contraintes internes au réseau sont à prendre à compte pour ladite allocation de fréquence, ledit tirage aléatoire est effectué après avoir retiré du lot considéré les fréquences interdites du fait desdites contraintes.

## Patentansprüche

1. Verfahren zur Zuweisung von Trägerfrequenzen für die Übertragung in einem Nachrichtenübertragungsnetz, insbesondere einem taktischen Netz, dadurch gekennzeichnet, daß es folgende Schritte aufweist:
- eine Aufteilung der Gesamtheit der verfügbaren Trägerfrequenzen des Netzes in Lose ungleicher Größe,
- eine Zuweisung eines von zwei zueinander komplementären möglichen Zuständen zu jedem Platz des Netzes bei dessen Eintritt in das Netz, der sich durch eine Frequenzzuweisungsanfrage für eine Verbindung zwischen diesem Platz und einem anderen Platz, der Platz der ersten Beziehung für den betrachteten Platz heißt, bemerkbar macht, und vor der Frequenzzuteilung, wobei dieser Zustand so gewählt ist, daß man komplementäre Zustände für den betrachteten Platz und für seinen Platz der ersten Beziehung erhält, wobei dieser Zustand für die späteren Verbindungen zwischen dem betrachteten Platz und anderen Plätzen des Netzes beibehalten wird,
- eine Frequenzzuweisung zu jeder zwischen zwei Plätzen des Netzes herzustellenden Verbindung mittels zufälliger Auswahl in demjenigen Los, das am größten ist, wenn die betrachteten Plätze zueinander komplementäre Zustände aufweisen, oder in demjenigen Los, das weniger groß ist, wenn die betrachteten Plätze sich in gleichen Zuständen befinden.

2. Verfahren nach Anspruch 1, dadurch gekennzeichnet, daß es drei Lose ungleicher Größe gibt und daß das Los mit der geringsten Größe als Los von Reservefrequenzen verwendet wird.

3. Verfahren nach Anspruch 2, dadurch gekennzeichnet, daß die Größe der Lose 60% bzw. 30% bzw. 10% beträgt.

4. Verfahren nach einem der Ansprüche 1 bis 3, dadurch gekennzeichnet, daß die zufällige Auswahl erfolgt, nachdem aus dem betreffenden Los die aufgrund der Zwänge verbotenen Frequenzen entfernt worden sind, wenn interne Zwänge des Netzes für die Frequenzzuordnung berücksichtigt werden müssen.

## Claims

1. Method of allocating carrier frequencies for transmission within a transmission network, such as a tactical network, characterised in that it comprises:
- breaking down the set of carrier frequencies constituting the available frequency resource for said network into batches of unequal size,
- attributing to any site of the network at the time it enters the network, as indicated by a request for allocation of a frequency for a link between said site and another site referred to hereinafter as the first connection site for the site in question, and previous to such allocation, one of two complementary states such as to obtain complementary states for the site in question and for its first connection site which are retained for subsequent links between the site in question and other sites of the network, and
- for any link to be set up between two sites of said network, allocating a frequency at random from the largest batch if the sites in question are in complementary states or from a smaller batch if the sites in question are in the identical state.

2. Method according to claim 1 characterised in that there are three unequal size batches and the smallest batch is a batch of spare frequencies.

3. Method according to claim 2 characterised in that the relative sizes of said batches are respectively 60%, 30%, 10%.

4. Method according to any one of claims 1 to 3 characterised in that constraints internal to the network are to be taken into account in frequency allocation said random allocation is effected after removing from the batch in question frequencies that are prohibited by virtue of said constraints.
